# DEMANDE DE BREVET EUROPEEN

(11) **EP 1 316 698 A1**
(43) Date de publication de la demande: **04.06.2003**
(21) Numéro de dépôt: 02292954.1
(22) Date de dépôt: 29.11.2002
(51) Int. Cl.: F02B 37/007, F02B 37/16, F02B 37/18, F02M 25/07

(54) **Dispositif et procédé de suralimentation d'un moteur à combustion interne**

(30) Priorité: 29.11.2001 FR 0115412
(71) Demandeur: Renault s.a.s., 92100 Boulogne Billancourt (FR)
(72) Inventeur: Clement, Christophe, 92500 Rueil Malmaison (FR); Guyot, Marc, 92260 Fontenay aux Roses (FR)
(74) Mandataire: Cemeli, Eric

(57) **Abrégé**

Dispositif et procédé de suralimentation d'un moteur à combustion interne (1), comprenant au moins deux turbocompresseurs (10,11), un moyen pour commander au moins l'un des turbocompresseurs de façon qu'à faible débit, un premier turbocompresseur (10) fonctionne et qu'à fort débit, les turbocompresseurs (10,11) fonctionnent, et au moins un moyen de recyclage des gaz d'échappement servant en plus de bipasse pour les turbocompresseurs (10,11) de façon qu'à faible débit, la turbine (12) du turbocompresseur (10) en fonctionnement voie passer l'ensemble des gaz d'échappement et qu'à fort débit, les gaz d'échappement se répartissent entre les turbocompresseurs (10,11).

## Description

L'invention relève du domaine des moteurs à combustion interne équipés de turbocompresseurs.

Dans un moteur suralimenté par turbocompresseur, les gaz brûlés en sortie du moteur sont dirigés vers la turbine du turbocompresseur à laquelle ils transfèrent une partie de leur énergie. La turbine entraîne un compresseur qui comprime l'air ou le mélange gazeux en entrée du moteur. Or, un turbocompresseur permet difficilement d'obtenir un fort rapport de compression à bas régime et à haut régime. La plage de fonctionnement du turbocompresseur est limitée par la limite de pompage à faible débit et la vitesse maximale du compresseur à fort débit. Par ailleurs, la turbine doit avoir une taille la plus réduite possible pour limiter l'inertie et donc le temps de réponse et pour pouvoir fournir une énergie suffisante au compresseur à faible débit et une taille la plus importante possible pour limiter la contre-pression à haut régime et travailler dans une zone de bon rendement sur le point de puissance maximale.

Pour satisfaire ces exigences contradictoires, il a été proposé une suralimentation à deux turbocompresseurs identiques. Dans le document US-A-4,709,552 (PORSCHE) un moteur à six cylindres à plat est alimenté par deux turbocompresseurs dont l'un fonctionne en permanence et dont l'autre est actif en fonction de paramètres de pression. Dans une première phase de fonctionnement à faible pression, l'ensemble des gaz brûlés est dirigé vers la turbine du premier turbocompresseur dont le compresseur assure la suralimentation de l'ensemble des cylindres, des vannes obturant l'entrée de la turbine et la sortie du compresseur du second turbocompresseur. Dans une deuxième plage de fonctionnement, à débit élevé, les deux turbocompresseurs sont en fonctionnement. Enfin, dans une plage de fonctionnement intermédiaire, les deux compresseurs sont en fonctionnement, mais la sortie du compresseur du second turbocompresseur est dirigée vers l'entrée du compresseur du premier turbocompresseur.

En principe, ce système fonctionne convenablement. Toutefois, il n'a guère été utilisé.

L'invention vise à améliorer ce système de suralimentation de moteur à combustion interne. L'invention vise également à améliorer la dépollution des gaz d'échappement d'un moteur à combustion interne à suralimentation séquentielle.

Le dispositif de suralimentation d'un moteur à combustion interne, selon un aspect de l'invention, comprend au moins deux turbocompresseurs et un moyen pour commander au moins l'un des turbocompresseurs de façon qu'à faible débit, un premier turbocompresseur fonctionne et qu'à fort débit, les turbocompresseurs fonctionnent. Le dispositif comprend au moins un moyen de recyclage des gaz d'échappement servant en plus de bipasse pour les turbocompresseurs de façon qu'à faible débit, la turbiné du turbocompresseur en fonctionnement voie passer l'ensemble des gaz d'échappement et qu'à fort débit, les gaz d'échappement se répartissent entre les turbocompresseurs. On réduit le nombre de pièces du dispositif, sa complexité et son coût.

Avantageusement, le dispositif comprend une seule conduite reliant les bancs de cylindres et le système de recyclage.

Dans un mode de réalisation de l'invention, le dispositif comprend un seul volume de dépollution monté en sortie de la turbine du premier turbocompresseur. On réduit encore le nombre de pièces du dispositif, sa complexité et son coût, tout en améliorant la dépollution, les gaz étant plus chauds en raison de leur passage dans une seule turbine.

Dans un mode de réalisation de l'invention, le dispositif comprend un catalyseur monté en sortie de la turbine d'un second turbocompresseur et du volume de dépollution.

Dans un autre mode de réalisation de l'invention, le dispositif comprend un catalyseur monté en sortie de la turbine d'un second turbocompresseur et un catalyseur monté en sortie du volume de dépollution.

Dans un mode de réalisation de l'invention, le moyen de recyclage des gaz d'échappement comprend un tube reliant l'amont de la turbine du premier turbocompresseur, l'amont de la turbine du second turbocompresseur et un organe de recyclage des gaz d'échappement, ledit tube permettant la circulation de gaz d'échappement de l'amont des turbines vers l'organe de recyclage des gaz d'échappement et de l'amont de la turbine du second turbocompresseur vers l'amont de la turbine du premier turbocompresseur. L'organe de recyclage des gaz d'échappement peut comprendre un moyen de refroidissement et une vanne pilotée et est relié d'une part audit tube et d'autre part à un collecteur d'entrée du moteur. Ledit tube remplit ainsi deux fonctions.

Dans un mode de réalisation de l'invention, le dispositif comprend une première vanne pilotée disposée à l'entrée de la turbine du second turbocompresseur et une deuxième vanne pilotée disposée en sortie du compresseur du second turbocompresseur.

Dans un mode de réalisation de l'invention, le dispositif comprend un clapet anti-retour disposé parallèlement à la première vanne pilotée.

L'invention propose également un groupe motopropulseur comprenant un moteur à combustion interne et un dispositif tel que ci-dessus. En particulier, il est proposé un moteur à cylindres en Vé ou à plat associé au dispositif. Le moteur en Vé pourra comprendre 6, 8, 10 ou encore 12 cylindres dans le domaine automobile, voire plus pour des moteurs marins ou équivalents. Le moteur à plat pourra comprendre 2, 4 ou encore 6 cylindres dans le domaine automobile. Le moteur peut être diesel ou à essence.

L'invention propose également un procédé de suralimentation d'un moteur à combustion interne, comprenant au moins deux turbocompresseurs, dans lequel on commande au moins l'un des turbocompresseurs de façon qu'à faible débit, un premier turbocompresseur fonctionne et qu'à fort débit, les turbocompresseurs fonctionnent, un moyen de recyclage des gaz d'échappement servant en plus de bipasse pour les turbocompresseurs de façon qu'à faible débit, la turbine du turbocompresseur en fonctionnement voie passer l'ensemble des gaz d'échappement et qu'à fort débit, les gaz d'échappement se répartissent entre les turbocompresseurs.

Dans un mode de réalisation de l'invention, à bas régime, un volume de dépollution monté en sortie de la turbine du premier turbocompresseur voit passer l'ensemble des gaz de combustion destinés à l'échappement.

Dans un mode de réalisation de l'invention, à faible débit, un tube de recyclage des gaz d'échappement sert à transférer les gaz de combustion destinés à l'échappement en provenance de l'amont de la turbine du second turbocompresseur vers l'amont de la turbine du premier turbocompresseur.

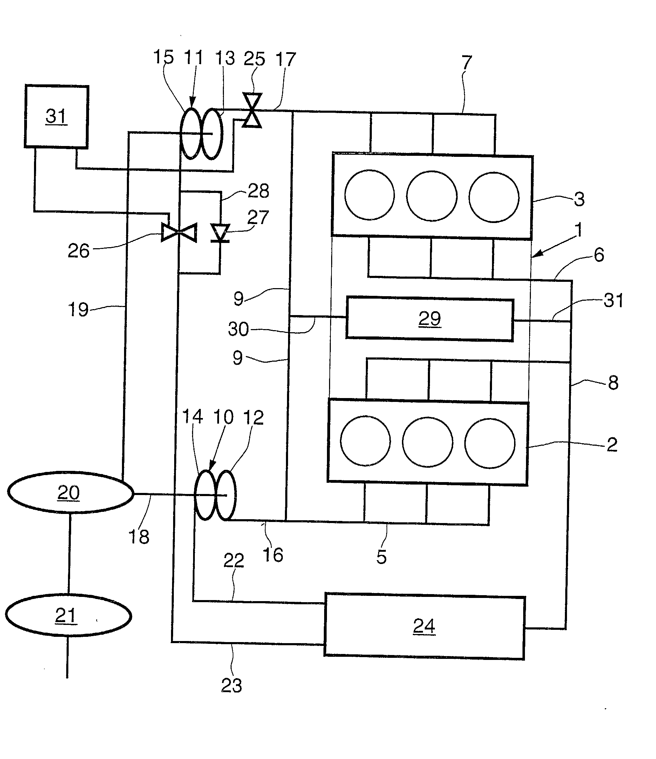

L'invention sera mieux comprise à la lecture de la description détaillée d'un mode de réalisation pris à titre d'exemple nullement limitatif et illustré par le dessin annexé qui est vue schématique de dessus d'un moteur à combustion interne équipé d'un dispositif de suralimentation, selon un aspect de l'invention.

Le moteur à combustion interne 1 est de type à six cylindres en V c'est-à-dire à deux bancs de trois cylindres référencés 2 et 3 présentant entre eux un angle généralement compris entre 15 et 90°. Le moteur 1 est par exemple à cycle diesel. Le banc 2 est pourvu d'un collecteur d'entrée 4 et d'un collecteur de sortie 5. Le banc 3 est pourvu d'un collecteur d'entrée 6 et d'un collecteur de sortie 7. Les collecteurs d'entrée 4 et 6 sont alimentés tous deux par une conduite 8. Les collecteurs de sortie 5 et 7 sont connectés entre eux par une conduite 9.

Le dispositif de suralimentation associé au moteur comprend un premier turbo compresseur 10 et un second turbocompresseur 11 chacun comprenant une turbine respectivement 12, 13 et un compresseur respectivement 14, 15. Le collecteur de sortie 5 est relié à la turbine 12 du turbocompresseur 10 par une conduite 16. De même, une conduite 17 relie le collecteur de sortie 7 à la turbine 13 du turbocompresseur 11. Les turbines 12 et 13 sont respectivement pourvues de conduites de sortie 18 et 19 qui débouchent dans un volume de dépollution commun 20.

Pour la clarté du dessin, les conduites en amont des compresseurs 14 et 15 n'ont pas été représentées. Des conduites de sortie 22 et 23 sont disposées en sortie des compresseurs 14 et 15 respectivement et débouchent dans un échangeur de température 24 commun apte à refroidir l'air comprimé issu des compresseurs 14 et 15 et ayant subi de ce fait un échauffement. L'échangeur 24 peut être de type air/air, ou air/liquide de refroidissement. La sortie de l'échangeur 24 est reliée à la conduite 8 qui débouche dans les collecteurs d'entrée 4 et 6 du moteur 1. La diminution de la température de l'air comprimé obtenue grâce à l'échangeur 24 permet une augmentation de sa densité et un meilleur remplissage des cylindres.

Le dispositif de suralimentation comprend en outre, une vanne pilotée 25 disposée sur la conduite 17 en amont de la turbine 13 du turbocompresseur 11, une vanne pilotée 26 montée sur la conduite 23 en sortie du compresseur 15 du turbocompresseur 11 et un clapet anti-retour 27 monté sur une portion de conduite 28 parallèlement à la vanne pilotée 26. La vanne 25 pourrait, en variante, être montée en aval de la turbine 13.

Un organe de recyclage de gaz d'échappement 29 est relié par une conduite 30 à la conduite 9 disposée entre les collecteurs d'échappement 5 et 7 et par une conduite 31 à la conduite 8 en amont des collecteurs d'entrée 4 et 6. Pour des raisons de compacité, l'organe de recyclage des gaz d'échappement est monté entre les bancs de cylindres 2 et 3 et est commun aux dits bancs de cylindres 2 et 3.

Les vannes pilotées 25 et 26 sont reliées à une unité de commande 31 capable de leur envoyer des ordres d'ouverture et de fermeture permettant le fonctionnement du turbocompresseur 11 dans les conditions qui ont été expliquées ci-dessus et sur la base d'informations reçues par l'unité de commande 31 relative à des paramètres de fonctionnement du moteur et du dispositif de suralimentation, notamment des paramètres de température et de pression.

Le fonctionnement du dispositif est le suivant. À faible débit du moteur 1 et/ou à faible charge, la vanne d'échappement 25 est fermée. La turbine 13 n'est donc pas alimentée et le compresseur 15 n'est pas entraîné. Les gaz d'échappement sortant du collecteur de sortie 7 passent par la conduite 9. Éventuellement, une partie des gaz d'échappement est prélevée par l'organe de recyclage 29 par l'intermédiaire de la conduite 30. Le reste des gaz d'échappement parvient à la conduite 16 et à la turbine 12 du turbocompresseur 10. En d'autres termes, l'ensemble des gaz d'échappement, à l'exception de ce qui est utile pour le recyclage alimente la turbine 12 qui reçoit donc une énergie élevée et est apte à faire fonctionner de façon efficace le compresseur 14. La vanne 26 est également fermée. Les gaz d'échappement après leur passage dans la turbine 12 passent par la conduite 18, le volume de dépollution 20 et le catalyseur 21.

À régime élevé correspondant à un fort débit moteur et/ou à une forte charge, les vannes d'échappement 25 et d'alimentation 26 sont ouvertes. Les deux turbocompresseurs 10 et 11 sont en fonctionnement. La conduite de liaison 9 ne sert plus qu'à équilibrer les pressions d'échappement et à fournir les gaz d'échappement à l'organe de recyclage 29 par l'intermédiaire de la conduite 30.Les gaz d'échappement après leur passage dans les turbines 12 et 13 parviennent au volume de dépollution 20 par les conduites 18 et 19 puis passent dans le catalyseur 21. Le volume de dépollution unique 20 voit donc passer l'ensemble des gaz d'échappement sauf ceux qui sont recyclés et peut effectuer une rapide montée en température ce qui extrêmement favorable à une dépollution très élevée.

Au contraire, dans un moteur en V à deux turbos classiques, il est monté un volume de dépollution par banc de cylindre. On rappellera ici qu'un volume de dépollution est pour l'essentiel un système de dépollution à échauffement rapide. L'invention permet donc une montée en température plus rapide du volume de dépollution, donc une pollution réduite et une économie en réduisant le nombre de volumes de dépollution utilisé. En outre, le volume de dépollution 20 sera disposé au plus près du moteur 1, ce qui n'a pas été représenté pour des raisons de clarté de dessin, et ce afin d'accroître sa montée en température. Bien entendu, l'invention est applicable à des moteurs présentant d'autres architectures, à cylindres à plat, ou encore à cylindres en ligne 2 avec un seul banc de trois, quatre, cinq ou encore six cylindres.

Dans un moteur à architecture en V, on peut prévoir de disposer le volume de dépollution 20 entre les deux bancs de cylindres 2 et 3, à proximité de l'organe de recyclage de gaz d'échappement 29 et ce afin d'accroître la température des gaz en entrée du volume de dépollution 20 en réduisant la longueur des conduites entre le volume de dépollution 20 et les collecteurs d'échappement 5 et 7.

La présente invention permet de bénéficier des avantages apportés par un système biturbo séquentiel, c'est-à-dire de bénéficier des qualités de couple et de faible inertie d'un petit turbo à bas régime et de la faible inertie de petits turbos à haut régime et de leur aptitude à délivrer un volume de gaz important lorsqu'ils fonctionnent tous les deux.

## Revendications

1. Dispositif de suralimentation d'un moteur à combustion interne (1), comprenant au moins deux turbocompresseurs (10, 11) et un moyen pour commander au moins l'un des turbocompresseurs de façon qu'à faible débit, un premier turbocompresseur (10) fonctionne et qu'à fort débit, les turbocompresseurs fonctionnent, **caractérisé par le fait qu'**il comprend au moins un moyen de recyclage des gaz d'échappement servant en plus de bipasse pour les turbocompresseurs de façon qu'à faible débit, la turbine (12) du turbocompresseur en fonctionnement voie passer l'ensemble des gaz d'échappement et qu'à fort débit, les gaz d'échappement se répartissent entre les turbocompresseurs.

2. Dispositif selon la revendication 1, **caractérisé par le fait qu'**il comprend une seule conduite (30) de recyclage des gaz d'échappement.

3. Dispositif selon la revendication 1 ou 2, **caractérisé par le fait qu'**il comprend un seul volume de dépollution (20) monté en sortie de la turbine du premier turbocompresseur.

4. Dispositif selon la revendication 3, **caractérisé par le fait qu'**il comprend un catalyseur (21) monté en sortie du volume de dépollution.

5. Dispositif selon la revendication 3, **caractérisé par le fait qu'**il comprend un catalyseur monté en sortie de la turbine d'un second turbocompresseur et un catalyseur monté en sortie du volume de dépollution.

6. Dispositif selon l'une quelconque des revendications précédentes, **caractérisé par le fait que** le moyen de recyclage des gaz d'échappement comprend un tube (9) reliant l'amont de la turbine (12) du premier turbocompresseur, l'amont de la turbine (13) du second turbocompresseur et un organe de recyclage des gaz d'échappement (29), ledit tube permettant la circulation de gaz d'échappement de l'amont des turbines vers l'organe de recyclage des gaz d'échappement et de l'amont de la turbine du second turbocompresseur vers l'amont de la turbine du premier turbocompresseur.

7. Dispositif selon l'une quelconque des revendications précédentes, **caractérisé par le fait qu'**il comprend une première vanne pilotée (25) disposée en entrée de la turbine du second turbocompresseur et une deuxième vanne pilotée (26) disposée en sortie du compresseur du second turbocompresseur.

8. Dispositif selon la revendication 7, **caractérisé par le fait qu'**il comprend un clapet anti-retour (27) disposé parallèlement à la première vanne pilotée.

9. Groupe motopropulseur comprenant un moteur à combustion interne et un dispositif selon l'une quelconque des revendications précédentes.

10. Procédé de suralimentation d'un moteur à combustion interne, comprenant au moins deux turbocompresseurs, dans lequel on commande au moins l'un des turbocompresseurs de façon qu'à faible débit, un premier turbocompresseur fonctionne et qu'à fort débit, les turbocompresseurs fonctionnent, un moyen de recyclage des gaz d'échappement servant en plus de bipasse pour les turbocompresseurs de façon qu'à faible débit, la turbine du turbocompresseur en fonctionnement voie passer l'ensemble des gaz d'échappement et qu'à fort débit, les gaz d'échappement se répartissent entre les turbocompresseurs.

11. Procédé selon la revendication 10, dans lequel à faible débit, un volume de dépollution monté en sortie de la turbine du premier turbocompresseur voit passer l'ensemble des gaz de combustion destinés à l'échappement.

12. Procédé selon la revendication 10 ou 11, dans lequel à faible débit, un tube de recyclage des gaz d'échappement sert à transférer les gaz de combustion destinés à l'échappement en provenance de l'amont de la turbine du second turbocompresseur vers l'amont de la turbine du premier turbocompresseur et à fort débit, ledit tube de recyclage des gaz d'échappement sert à transférer les gaz de combustion destinés au recyclage en provenance de l'amont des turbines des turbocompresseurs vers un organe de recyclage.
